Europäisches Patentamt

European Patent Office

Office européen des brevets

(19)

(11) Publication number: **0 051 332**
**B1**

# EUROPEAN PATENT SPECIFICATION

(45) Date of publication of patent specification: **11.04.84**

(51) Int. Cl.³: **G 06 F 3/04, H 04 L 25/38**

(21) Application number: **81201168.2**

(22) Date of filing: **22.10.81**

(54) Two-wire bus-system comprising a clock wire and a data wire for interconnecting a number of stations.

(30) Priority: **31.10.80 NL 8005976**

(43) Date of publication of application:
**12.05.82 Bulletin 82/19**

(45) Publication of the grant of the patent:
**11.04.84 Bulletin 84/15**

(84) Designated Contracting States:
**AT BE CH DE FR GB IT LI NL SE**

(56) References cited:
EP - A - 0 008 416
US - A - 3 889 236

COMPONENTS REPORT XIII, no. 4, 1978,
ERLANGEN (DE) H. PELKA: "Software-
Controlled Serial Data Input into Microprocessor
System 8080", pages 137-140

ELECTRONIC COMPONENTS & APPLICATIONS,
vol. 3, no. 1, November 1980, EINDHOVEN (NL)
A.P.M. MOELANDS: Serial I/0 with the
MAB8400 series microcomputers" pages 38-46

(73) Proprietor: **N.V. Philips' Gloeilampenfabrieken**
**Groenewoudseweg 1**
**NL-5621 BA Eindhoven (NL)**

(72) Inventor: **Moelands, Adrianus Peter Martin M.**
**c/o INT. OCTROOIBUREAU B.V. Prof. Holstlaan 6**
**NL-5656 AA Eindhoven (NL)**
Inventor: **Schutte, Herman**
**c/o INT. OCTROOIBUREAU B.V. Prof. Holstlaan 6**
**NL-5656 AA Eindhoven (NL)**

(74) Representative: **Strijland, Wilfred et al.**
**INTERNATIONAAL OCTROOIBUREAU B.V. Prof.**
**Holstlaan 6**
**NL-5656 AA Eindhoven (NL)**

Courier Press, Leamington Spa, England.

# Two-wire bus-system comprising a clock wire and a data wire for interconnecting a number of stations

## BACKGROUND TO THE INVENTION

The invention relates to a communication system, comprising a first plurality of stations which are interconnected by a two-wire line, comprising a data wire for transporting thereon a series of data bits, and a clock wire for transporting thereon for each data bit a synchronizing clock signal in synchronism therewith, between at least one transmitting station and at least one receiving station. The stations may be of different types: they may be (micro) computers with a data processing function, but also input/output processors, function generators, memories, input/output equipment such as keyboards or displays, or sensors for physical/chemical quantities. A system of the described kind is known from United States Patent Specification 3889236 (PHD 72133), assigned to Applicant. The known system provides the data transport via the two-wire line in only one direction.

## SUMMARY OF THE INVENTION

It is an object of the invention to enable a single two-wire line to be used for the interconnection of a number of stations, where the number of stations and the direction of data transfer are not limited *a priori;* reliable synchronization being obtained and simple signalling of the beginning of the end of a communication operation being possible. The object is realized in accordance with the invention as claimed in claim 1, in that said clock wire is a clock bus wire and said data wire is a data bus wire, both wires being provided with logic means for forming a wired logic function between the voltage levels which denote a first and a second logic value respectively which are transmitted by the relevant stations, so that the voltage level on both wires can be pulled to the first logic value by any station presenting a signal having that first logic value to the wire in question, thereby masking any signal having the second logic value that may be presented to the wire in question, and set of said transmitting/receiving stations comprise at least one master station and at least one slave station, any master station comprising first means for in each bit cell generating a finite length clock pulse having the second logic value for presentation to the clock wire, said at least one transmitting station comprising second means for in each bit cell of predetermined bit cell sequences presenting a respective data bit on the data wire for a period of time which covers the duration of the associated clock pulse on the clock pulse wire, including the edges thereof, any master station also comprising:
a) third means for forming a first stop signal by forming a signal transition on the data wire from said first to said second logic value, during the presence of a signal of the second logic value on the clock wire;
b) fourth means for forming a first start signal by forming a signal transition on the cata wire from said second logic value to said first logic value during the presence of a signal of the second logic value on the clock wire;
any non-master station connected in the set comprising fifth means for continuously presenting said second logic value to the clock wire and any non-transmitting station connected in the set comprising sixth means for during said predetermined bit cell sequences continuously presenting said second logic value to the data wire.

A master-transmitting station and a master-receiving station for use in the system according to claim 1 are claimed in claims 17 and 20 respectively.

A station which generates a message is a transmitting station. A station which absorbs a message is a receiving station. A station which controls the transport of a message is a master station. A station which is exclusively controlled by one or more stations during the transport of a message is a slave station. Any station which is suitable to act as a master (this is not necessary for all stations, for example, not for the said sensors) can initiate a data transport, starting from a rest condition. While there is a given distribution of the functions of master and slave stations, the functions of a transmitting/receiving station may change, for example, in that a first message is answered by a second message.

In the case of at least two simultaneously transmitting stations, these stations are preferably all master stations, each master station comprising a time slot generator with an input for receiving a second start signal which is generated on the clock wire and means for supplying an "end" signal after termination of the time slot started thereby, said first means being suitable for forming a modified signal for the clock wire under the control of said "end" signal, there also being provided a detector for detecting a signal transition on the clock wire as an exclusive representation of said second start signal. Thus, all transmitting stations are synchronized alternately by the transmitting station which first forms a signal transition to the first logic value on the clock wire and the transmitting station which last forms a signal transition to the second logic value on the clock wire. Thus, the data simultaneously appearing on the data wire can also be detected without interference between them. "Interference" is not to be understood to mean herein the mutual influencing of the voltage level, because a single data bit of the first logic value would mask any data bits of the second logic value. However, as a result of the organization, the data bits appear each time in defined time slots. A half "handshake" is thus formed. As a result, comparatively large differences between the time slots produced by the relevant time slot generators can be compensated for. Such differences may be due to different internal clock frequencies of the otherwise identical time slot generators, but may also be due to the fact that the signal generators for the clock wires exhibit differences in the ratio between the durations of the first and the second logic signal value. It is to be noted that a transmitting station can at the same time detect the signal on the clock wire and/or data wire, so that it is known whether or not its own signal is masked. The case where several stations act simultaneously as a transmitter occurs during the arbitration procedure to be described hereinafter.

Preferably in a master station of the communication system said second and fourth means are suitable for starting a data transport operation by successively forming:
said first start signal;
a first series of at least two data bits having said first logic value;
a second series of at least one data bit having said second logic value;
a third start signal whose shape corresponds to the first start signal;
all stations connected comprising an interrogation device whose "dead" time is shorter than the value corresponding to the length of said first series.

In general there are two types of station: first of all, there are stations which are continuously on stand-by, for example, a memory; such a memory may be activated at an arbitrary instant. Secondly, there are stations in which given processing procedures take place, or stations which do not have to be continuously active for other reasons. Such stations, for example microprocessors, may comprise means for receiving an interrupt signal, so that the current activities are stopped. The relevant station can then also be activated at an arbitrary instant. However, there are also microprocessors without an interrupt mechanism. As a result of the described step, such microprocessors need not interrogate the data line twice (or more) per clock pulse period, but only at least once during said series. As a result, the efficiency of the internal processing is increased. "Dead time" of a connected station is to be understood to mean the longest period time occurring between two successive interrogation instants. Thus, for a station comprising an interrupt mechanism, the length of the dead time equals zero. When an element of the first series is detected, the station having a comparatively long dead time can change over to an increased interrogation frequency.

## BRIEF DESCRIPTION OF THE FIGURES
Figure 1 shows diagrammatically the interconnection of two stations;
Figure 2 shows a time diagram of the data transfer between two stations;
Figure 3 shows a time diagram of the starting/stopping of the data transfer;
Figure 4 shows a second time diagram of a start operation;
Figure 5 shows a time diagram of the synchronization between several master stations;
Figure 6 shows a time diagram of the arbitration between several stations;
Figure 7 shows a block diagram of a station at the register level.
Figure 8 shows a diagram of a bidirectional data transfer operation.

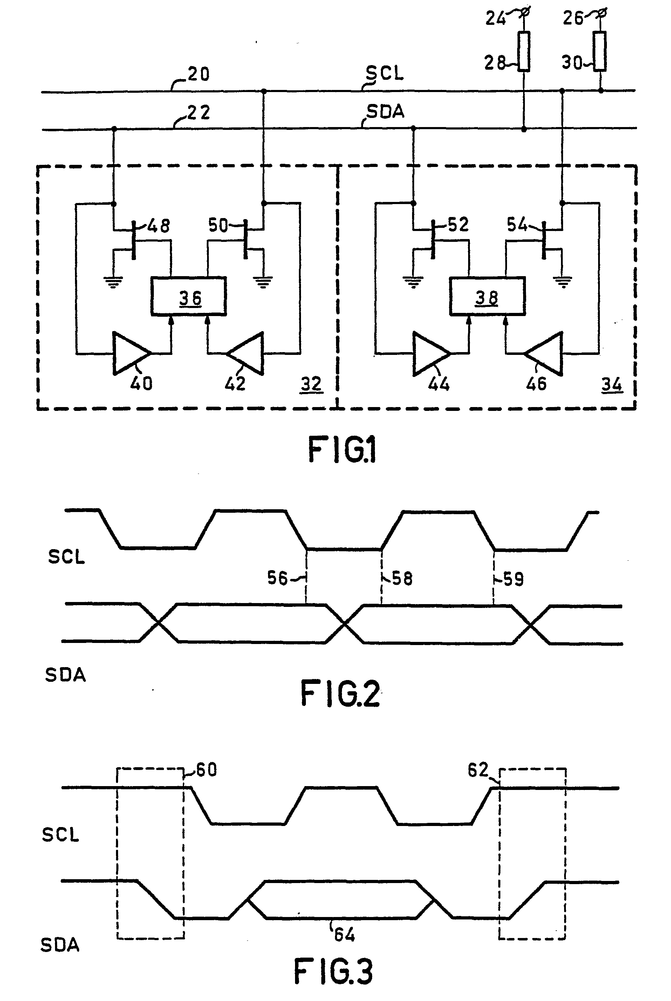

## FUNCTIONAL DESCRIPTION OF AN EMBODIMENT
Figure 1 shows diagrammatically the connection of two stations to a clock wire 20 (SCL) and a data wire 22 (SDA). The two stations 32, 34 comprise signal receivers 40, 42, 44, 46 for example amplifiers having a sufficiently high input impedance. The stations furthermore comprise transistors 48, 50, 52, 54, for example MOS transistors. When one of these transistors becomes conductive, the relevant line (20, 22) assumes a low potential. Also present are resistors 28, 30. Terminals (ports) 24, 26 are to be connected to a high voltage (VDD). If the transistors 48 and 52 are both cut off, the potential of the line 22 becomes substantially equal to VDD. The values of the resistors 28, 30 are large with respect to the resistances of the transistors in the conductive state, and small with respect to those of the signal receivers connected in parallel therewith. When the potential VDD is taken as the "logic 1", each of the lines 20, 22 performs the "AND-function" for the logic signals received thereon. The stations 32, 34 also comprise units 36, 38 which perform further functions to be implemented in the stations; they notably form the data source and the data destination for the two-wire line. The output signals thereof control the conducting and blocking of the transistors 48, 50, 52, 54. A more detailed diagram of a station will be described with reference to Figure 7. It is to be noted that not all stations have to perform all functions. A station which performs exclusively a slave function need not comprise the means for generating a clock pulse train. A station which must exclusively be capable of receiving data need not comprise means for supplying data to the data wire. In general, a station which can act as a master must comprise the latter means, because otherwise the arbitration procedure to be described hereinafter could not be carried out.

Figure 2 shows a time diagram of the data transport between two stations. The clock signal is shown on the upper line (SCL). "Low" in this case means "logic 0" and "high" means "logic 1". A sequence of data bits is given on the lower line (SDA). The data signal may change between the instants denoted by the lines 56 and 58. The data signal should remain the same between the instants denoted by the lines 58 and 59 (i.e. including the time occupied by the edges of the clock signal). It is to be noted that the horizontal lines in the Figures denote the logic voltage levels; usually, between the two logic levels a zone exists in which the translation of the physical voltage level to the logic level is not unambiguous. For a physical voltage step from 0 to +12 Volts, the level "logic 0" is defined, for example, as "physically less than +0.5 Volts", and a logic "high" is defined, for example, as "physically at least +10 Volts". In the range between +0.5 and +10 Volts, the discrimination thereof in the stations need not be uniform. The slopes therefore, denote the "ambiguous" voltage range. The signals on the line 20 (SCL) are formed by the "master" of the data transport, of whether or not they participate in the data transport, the non-master stations always produce logic "1" signals on the line 20. The signals on the line 20 (SCL) are of a periodic nature in Figure 2. The signals on the line 22 (SDA) are formed by a transmitting station. The two parallel lines indicate that the data content may be "0" or "1". Whether or not they participate in the data transport, the non-transmitting stations, continuously produce logic "1" signals on the line 22. Thus, the following transport possibilities exist:

a) one "master" station transmits data to one or more receiving "slave stations",

b) one "master" station receives data from one "slave" station. Generally, this function is always preceded by an operation according to a); for example: before a memory (usually a slave station) can be read, it has to be addressed.

Some devices can perform only one or a few of the four feasible functions: for example, a keyboard device will always serve as a "master transmitter" and a display device with LED elements will always act as a "slave receiver". A magnetic or optical disk memory without buffer will usually have to operate as a "master" (transmitting or receiving). Other devices such as microcomputers can perform all four functions.

Figure 3 shows a time diagram of the starting and stopping of the data transport between two stations. Initially, all stations generate high signals on the clock wire and the data wire. The transport is started in that one of these stations generates a transition from "high" to "low" on the data wire, while the signal on the clock wire does not change; the relevant station thus manifests itself as the new master. This pattern of signals is not permissible for the customary data transport (Figure 2). All other stations thus detect that a new master of the bus manifests itself (block 60). Subsequently, the master produces a transition on the clock line, so that the first data bit can be generated on the data wire: this bit (64) may have the value "0" as well as "1". The data transport is thus always started with the transmitting station being the master station. This situation may prevail throughout the communication procedure. On the other hand, the master station may alternatively address another station as a slave in the course of the procedure, and instruct this slave station to start a transmission operation. During the transmission by the slave, the original master station remains the "master"; this implies that the "slave" will transmit a message of known length. For the termination of the data transport, first the transmission by the slave, if any, is terminated: the "slave" station then supplies high signals to the clock wire and the data wire. The transmission by the master station is subsequently terminated by means of the stop signal: the clock wire being at a low potential, first the potential of the data wire is also made low. Subsequently, the potential of the clock wire is made high. Finally (block 62), the potential of the data wire is made high. The latter signal pattern again is not permissible in customary data transmission, and the actual master thus releases the bus line again, so that a next station can manifest itself as the next "master". The following measures allow for dropping the requisite that the message length be pre-specified. After reception of each 8-bit data byte the "master" generates a ninth clock pulse. During this ninth clock pulse interval the receiver ("master" or "slave") may generate a conventional acknowledge signal by driving the data line to logic zero. Then the transmission between "slave-emitter" and "master-receiver" (e.g. between a memory and a microcomputer during a memory read out) may be terminated in that the master does not produce the acknowledge signal. The slave thereupon produces a high signal on the data bus to enable the "master-receiver" to generate the "stop" condition. The case where several stations simultaneously manifest themselves as the master will be described later. The periodic nature of the clock signal (Figure 2) is maintained each time only between the start condition (block 60) and the stop condition (block 62). The start and stop conditions can be detected in a simple manner, if the stations either comprise an interrupt mechanism or interrogate the potential of the data wire at least twice per clock pulse period in order to detect the transitions in the blocks 60 and/or 62, or are continuously prepared to detect and react directly to a signal transition.

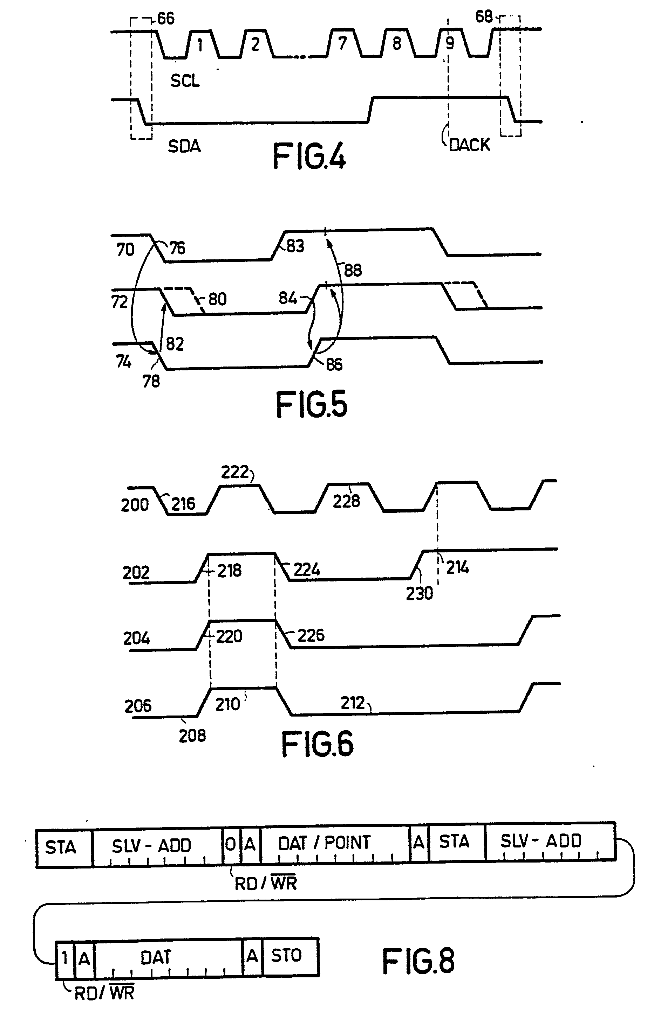

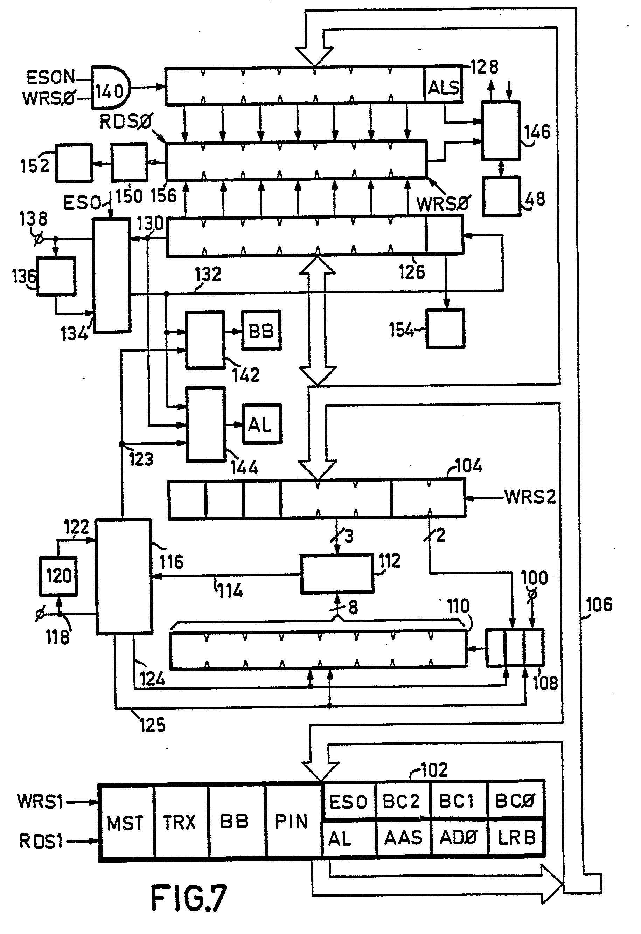

In this respect, Figure 4 shows a second start procedure where a lower interrogation frequency of the data wire (less than twice per clock pulse period) suffices. The first start condition in block 66 corresponds to that in block 60. Subsequently, the actual master of the bus line generates a serial 8-bit data byte having the value "0000 0001" (hexadecimal '"01"'). This means that the signal on the data line remains low for seven clock pulses (1, 2 . . . 7) and becomes high between the seventh and the eighth clock pulse. The start byte 0000 0001 must not be used for another communication purpose in the relevant computer system. Receiver stations must not supply an acknowledge signal in reaction to the reception of this code as they would normally do under the control of a data byte addressing such a receiver station. The ninth clock pulse acts as a dummy acknowledge DACK, the data signal then remaining unchanged. Subsequently, the clock wire becomes high again and a next start condition is generated in block 68 (identical to block 66). The combination of start byte plus dummy acknowledge is chosen for compatibility with the format of the data transport yet to be described. The code byte 0000 0001 is reserved. Thus, in this case the stations have approximately seven clock pulse periods for detecting the low signal on the data wire; the interrogation frequency of the data wire then has to be only at least approximately once per seven clock pulse periods instead of one per half clock pulse period. As a result, for example, in a microcomputer without interrupt mechanism, the internal activities can be performed better because they are held up less often by the interrogation operations. When the low signal on the data wire is detected, the interrogation mechanism of the relevant station is switched over to the higher interrogation speed (twice per clock pulse period) for correct detection of the second start condition (block 68). For all cases where the first start condition also has an activating effect, the reception of the next start condition acts as a reset signal. This is the case for continuously alert stations which do not have an internal clock so that they can perform only the slave function. The described configuration of seven data bits "0" and two data bits "1" may also be different, for example 15 x "0" and 2 x "1" or 3 x "0" and 2 x "1". As from the formation of the start condition in block 66, the bus is in the condition "busy"; as a result, no new master stations can manifest themselves as such. The bus assumes the condition "free" after the formation of the stop condition according to block 62 in Figure 3, for example after expiration of a period of time corresponding to one clock pulse period of the relevant station.

Figure 5 shows a time diagram of mutual synchronization of several master stations. This situation occurs only if the bus is released in accordance with block 62 in Figure 3. In principle, any station comprising its own clock mechanism can manifest itself as the next "master". If the interval of time expiring between these occurences is sufficiently long, the second and further stations will detect the occupied condition of the bus in the manner described with respect to Fig. 4. If this interval of time is sufficiently small however, it must be decided to which of the stations the but will be assigned. Figure 5 shows the relevant synchronization mechanism. This mechanism commences as from the instant of detection of the first clock pulse edge in block 66 in Figure 4; however, the actual arbitration procedure may commence only after completion of block 68. It is assumed that two stations participate in the synchronization procedure. The first station forms the signal of line 70 on the clock wire. The second station forms the signal of line 72. The signal thus summed on the clock wire is shown on line 74. The delay times of the signals on the clock wire are not taken into account. It is assumed that the first station has a clock frequency which is higher than that of the second station. Both stations comprise a time slot generator, for example a counter having a given capacity. In the first instance the carry output signal of this counter controls a transition in the output signal of the relevant station. At 76, the first station produces a signal transition from high to low. At 78, this produces a signal transition from high to low on the clock wire. A subsequent transition from high to low by the second station (indicated by the interrupted line at 80) would then have no externally detectable effect. Therefore, the second station comprises a detector which detects the transition at 78 and which subsequently directly controls the transition at 82, the relevant time slot generator then being started. In this respect, the figure arbitrarily shows a small delay. At 83, the first station generates a transition from low to high, but this cannot be noticed on the clock wire; therefore, the time slot generator of the first station remains blocked for further counting. At 84, the second station also generates a signal transition from low to high. This is the last one of the participating stations to do so so that at 86 the sum signal on the clock wire also becomes high and, under the control thereof, the time slot generators in both stations are started in order to count down the next half clock pulse period. Again a small delay is arbitrarily indicated. The lengths of the "high" parts of the composite clock signal on line 74 are thus determined by the fastest station (generating the shortest time slot). The lengths of the "low" parts are determined by the slowest station (generating the longest time slot). If the clock signals are not symmetrical (the station produces high and low signals of unequal durations in the non-disturbed condition), the frequency of the internal clock of the station will not be decisive alone. Furthermore, during the starting up of the synchronization, the roles are liable to be reversed if the transition at 82 occurs before that at 76. The starting and blocking of the time slot generators by the signal conditions on the clock wire then always take place in the same manner.

In given cases, the transition at 84 may be delayed further in the second station. In that case all time slot generators participating in the synchronization operation will assume the blocked condition. Meanwhile, the second station can perform given operations, for example, the parallel storage of an 8-bit data byte in a local memory after serial reception thereof. The presence of one (very) slow station together with one or more faster stations does not affect the signal transitions from the first logic value to the second logic value on the clock wire.

Figure 6 shows a time diagram of an arbitration procedure between several stations which act as "master transmitter". A simple start procedure has been described with reference to Figure 3, and a more complex start procedure for use with stations which may have a comparatively long dead time has been described with reference to Figure 4. It has also been stated that several stations may manifest themselves simultaneously as the "master" and the method of activating the "non-master" stations has also been described. It has been described with reference to Fig. 5 how several simultaneously manifest "master" stations are mutually synchronized at the level of the clock pulse period. If several master stations manifest themselves simultaneously, first a single master station has to be selected prior to the master-slave communication. This is realized by means of the arbitration procedure which commences directly after completion of the start operation according to Figure 3 or Figure 4. When it manifests itself, each station has an address number, which is a 7-bit number. All address numbers mutually differ. It is not necessary to limit each station to only one feasible address number. Line 200 shows the signal on the clock wire. Line 202 shows the signal generated on the data wire (SDA) by a first station. Line 204 shows the signal generated on the data wire by a second station. Line 206 shows the signal actually formed on the data wire. It is assumed that all stations are exactly synchronized; therefore the synchronization process according to Figure 5 is not shown. After the formation of the start condition, the data wire will be low (208). If the clock wire becomes low (216), the data signals may change. The first bits of the two address numbers are assumed to be "1", so that both stations produce a signal transition (218, 220) and the data wire carries a high signal (210) during the next clock pulse (222). The second bits of both address numbers are assumed to be "0", so that subsequently both stations produce a signal transition again (224, 226) and the data wire carries a low signal (212) during the next clock pulse (228) in correspondence with both address numbers. Of the third address bits, only that of the first station is assumed to be "1" so that a signal transition occurs only at 230; however, this transition is masked in the signal 206. At the next clock pulse, the first station will know (214) that it has lost the arbitration; the relevant information is stored and this data blocks the furthest supply of the relevant address number to the data wire. The other station is the winner in this case, but it detects this only after the bits of the entire address number have been successively applied to the data wire. The winning station may subsequently start a communication operation with one or more slave stations. First these stations are selected, followed by the actual data transport; subsequently, the slave station (stations) is (are) released and the master station generates the previously described stop condition. Non-transmitting stations (for example, the first station as from line 214 in Figure 6) continuously produces "1" signals on the clock wire and the data wire, exept when they act as the master receiver as has already been described.

A further possiblility is the following. The "master" manifests itself by generating the address of its intended "slave". Consequently, after generation of the "slave" address the identity of the "master" is not known to other stations, and a plurality of "masters" could be addressing the same "slave" station. Therefore the arbitrating procedure is continued during the ensuing data transport. If a plurality of "master" stations all transmit the same message to a single "slave", none of them will lose the arbitration.

## EMBODIMENT OF A STATION

Figure 7 shows a block diagram of a station at the register level in so far as it concerns the operation of the two-wire bus line. The assembly is suitable for incorporation in a microcomputer. The other parts of the microcomputer have been omitted for the sake of simplicity. In a simpler station, several parts may be omitted. The internal clock of the microcomputer is to be connected to input 100. Register 102 contains a status word. Register 104 contains a frequency control word. These registers are connected to an internal 8-bit data bus 106 of the microcomputer. The register 102 contains 4 bits (at the extreme left) which can be written to and read from the bus 106. The four bits at the top right can be written only from the bus; the four bits at the bottom right can only read to the bus 106. The bits in the part enclosed by a heavy line, moreover, can only be written in response to additional signals yet to be described. The register 102 can receive a write control signal WRS1 and a read control signal RSD1 which are formed elsewhere in the computer. The register 104 is filled under the control of a write control signal WRS2 which is also formed elsewhere in the microcomputer. Element 108 is a programmable counter which is capable of dividing the frequency on the input 100 by 5, 6, 7 or 8. The selection between these four possibilities is performed by two bits from the register 104. Element 110 is an 8-bit counter which receives the output signal of the counter 108. Element 112 is a multiplexer which receives the bits from the eight bits portion of the counter 110. The selection from these eight bits is controlled by three bits from the register 104. The clock signal appears on line 114 and is applied· to a clock control element 116. The clock control element conducts the clock signal from line 114 to line 118 if a logic function has been performed, i.e. if the relevant station acts as the master station and if, moreover, the enable bit for serial data transport (see hereinafter) has the value "1". If the logic function has not been performed, the clock control element 116 continuously generates a logic "1" for clock wire 118. The clock wire 118 is connected to clock filter 120. This filter comprises a data flipflop which receives the signal from the terminal 100 as the write control signal. The interference on the clock signal received is thus adequately suppressed. The interference-suppressed clock signal is applied, via line 122, to the clock control element 116 again in order to implement the synchronization in accordance with Figure 5. To this end, a further logic function is formed: if the incoming clock signal is high and if the relevant station acts as the master station, an enable signal appears on line 124; it is only this condition is satisfied that the cascade-connected counters 108, 110 may continue counting in order to produce the signal indicated in Figure 5 as from indication 88 on the clock wire. If this condition is not satisfied, these counters will stop as from the. instant at which a high signal is produced on the clock output. If a signal transition from high to low is produced on the clock wire, a reset signal for the counter 108, 110 will appear on line 125, so that a low signal will be directly generated on the clock wire (via line 114) and the counters will count the signals on the line 100. The duration of the low signal on the clock wire is thus determined by the slowest station, the duration of the high signal being determined by the fastest station. The processing of the signal on the line 123 will be described hereinafter. The three further control bits in the register 104 remains available for other functions.
The clock control subsystem also comprises a delay element 120 for the clock signals received.

This delay element is composed of two cascade connected data flipflops which are both loaded with the internal clock signal which is received on the terminal 100. The output signal of the "delayed clock" is applied to a logic gate in the clock control element 116. The latter gate will only conduct if the relevant station either acts as a master station or has to participate in the address comparison or is selected (see later). In that case the "shifted clock signal" is derived from the "delayed clock". If none of the three conditions is satisfied, the last-mentioned gate will continuously output a logic "1". Output leads of clock control element 116 are labelled 123, 124, 125, respectively.

The "delayed clock" and "shifted clock" therefore, are synchronized by the clock signal received on the clock wire and are used for synchronizing the supply of the data signals to the data wire and the further processing of the data. If the bits at the various positions in the register 102 have the value "1", they have following respective indication and control functions:

MST: the relevant station is or desires to function as the master station of the bus line. A "0" indicates the slave function. Prior to the realization of a communication operation, this bit can be set by the central control system of the microcomputer. The ultimate operation as the master station is codetermined by the content of the bit positions AL, AAS and AD∅. The information of this bit position is applied notably to the clock control element 116 in order to form the previously described logic functions.

TRX: the relevant station is/wishes to act as the data source (transmitter). A "0" indicates the receiver function. This concerns the "actual" communication operation, i.e. not the arbitration where each participating station acts as "master transmitter".

BB: the bus line is busy ("0" means "free").

PIN: this signal is active when low. This indicates that the relevant station (microcomputer) must serve the bus either by reading a serially received data byte, or by serially transmitting the next data byte, or by generating a stop condition signal.

ESO: this is an enable bit for the serial in/out communication operations. It is used exclusively for the initialization of the station and is set to the "1" state. The further elements of this initialization procedure will not be described herein.

BC2, BC1, BC∅: the three bits form a counter state which is filled from the bus 106 and further with the positive going edges of the "shifted clock pulses" described with reference to the clock control element 116. The data bits received are thus counted in order to activate a comparison element 156 (to be described hereinafter) at the correct instant; that is to say, when all address bits to be compared have arrived in the correct position, this counter supplies the signal "C7". In the case of a communication operation, this signal indicates that a complete data byte has been transported. In that case a parallel operation as regards the register 126 must take place. The resetting of this counter is realized under the control of the start condition described with reference to Figures 3 and 4. The decoder for the count "C7" is not shown.

AL: the relevant station has lost the test phase of the arbitration for the master station (see Figure 6, at indication 214) and cannot perform the intended communication operation.

AAS: the relevant station is addressed by another master station as a slave station.

ADØ: the relevant station is addressed as a slave in a general mode (general broadcast).

LRB: this bit represents either the last received bit of the data byte, or the acknowledge bit. Note that the acknowledge bits is the ninth bit. Because the data bytes are eight bits wide, the shift register will not accommodate such ninth bit. If only an eight-bit transport is executed, this bit is identical to the least significant bit in element 126. Then only for the first byte transmitted this bit indicates the transport direction. Fig. 7 also shows a number of adaptation elements for the data wire. First of all, there is provied a shift register 126 which is coupled end-around in a loop series with the data control element 134 and which is parallel and bidirectionally connected to the internal bus line 106. The previously mentioned "shifted clock pulses" supplied by the clock control element act as shift pulses. The parallel filling of the register 126 is realized under the control of the signal WRSØ; the parallel reading is realized under the control of the signal RDSØ, said signals being supplied by the central control system of the microcomputer. The data control element 134 also receives the signal ESO from the register 102. This signal controls the output stage (line amplifier) of the data control element 134 which is connected to the data wire. If ESO is zero, the relevant station will continuously generate a high signal for the data wire. The data filter 136 corresponds to the clock filter 120 as regards construction and operation. The data control element 134 also comprises a switching device having two states. In one state, the signals on line 130 will be applied to line 138 via a coupling element and the station will act as a data transmitter; to this end the signal MST must have the value "1" and, moreover, the stop condition STP (see Figure 3 and also hereinafter) may not be detected. The data originating from the element 136 is continuously (i.e. also in the other state of said switching device) supplied to the shift register 126 via line 132. This register receives the already mentioned "shifted clock pulses" as shift pulses. The bit TRX controls the direction of the actual data transport. If a "master"-transmitter station loses an arbitration operation this bit TRX is reset to zero. The element 142 acts as a detector for the "busy" condition of the bus wire. To this end, it receives the output signals of the element 134 and 116, thus detecting the conditions in the blocks 60 and 62, respectively, in Figure 3. This detector may comprise two data flipflops which store the clock signal under the control of a negative-going data edge and a positive-going data edge, respectively (so detecting the starting condition and the stop condition, respectively, provided that the clock signal is high). The output pulses of these two data flipflops act as a set/reset signal for the bit BB. Each "1" output from a said flipflop resets the other. If the bit BB has the value 1, the microcomputer will detect that a waiting period must expire before an attempt may be made to become the master station. However, if the relevant station had already manifested itself as the master station, the operation continues unimpeded (unless the arbitration is lost subsequently).

Element 144 contains the logic for realizing the arbitration. The logic system comprises a logic gate which supplies the value "1" if both the signal on line 130 is a "1" and the signal on line 132 is "0" if the start condition is detected in element 142) and the bit MST has the value "1". This is synchronized by the clock signal on the line 122. If the relevant gate indeed supplies a "1", it controls the resetting of the bits MST and TRX (if necessary) and sets the bit AL to "1". Due to the synchronization with the clock, the delay until the line 214 in Figure 6 occurs. The circuit also comprises an address register 128. This register is loaded with an address from the bus line 106 under the control of a "1" signal from AND-gate 140- Loading takes place only during the initialization under the control of the signal WRSØ which also acts as the load control signal for the register 126 and furthermore the signal ESON, being the inverse value of bit ESO from register 102 (after the initialization, ESO has the value "1"). The register 128 serves for the storage of the address of the relevant station (7 bits). The least significant bit ALS acts (if it has the value "1") to stop the address comparison in the comparator 156, so that after each data byte received or transmitted an interrupt signal is generated. ALS indicates "always selected".

Element 156 is a 7-bit address comparator for the address number in the register 128 and the address received in the register 126 from data line 138. This comparison is activated only once per communication operation, that is to say only for the first byte received and synchronized by the counting signal C7 from the 3-bit counter BC2, BC1, BC0. If correspondence exists, the element 150 (bit AAS) is set to "1". If the "general mode" is applicable, element 152 (bit ADØ) is also set to "1"; this is realized under the control of a specific address which acts in common for all stations, for example, the address "1111111". Element 146 comprises interrupt control logic circuitry. If the bit ESO has the value "1" and if the beat ALS is "0", this element supplies an interrupt request signal under the control of a correspondence signal from the comparator.

A communication operation is performed as follows: a station which wishes to initiate the communication operation first sets the bits MST, TRX and BB to "1". Under the control thereof, the data control element directly generates the start condition of the data wire. All stations detecting this start code set the bit BB to "1", so that they can no longer become the master. The master station then generates an 8-bit data byte according to the procedure of Figure 4. This byte is applied to the data wire 138 via the bus 106 and the register 126. The ninth bit is controlled by one of the three bits not yet specified in the register 104 which can also be filled via the data bus 106. After the second start code, the arbitration procedure in accordance with Figure 6 commences. After completion of the arbitration, the relevant winning station will be the "master" transmitter and all other stations will be in the position of "slave". As has already been stated, the start code sets a flipflop in the station. When this flipflop has been set and the relevant station has $MST = 0$, the address comparison is enabled: the "shifted clock" is formed again so that the bit counter (BC∅—BC2) correctly continues counting. The signal C7 activates the address comparison. The addressed station then sets the bit AAS (and is selected). Subsequently, the communication between the master station and the slave station (stations) may take place; the bit TRX each time indicates the transport direction of the next date byte. Finally, the master station forms the stop code in that the signal according to Figure 3 is generated in its data control element. As a result, the bits PIN and BB are reset and, moreover, also the bits AAS and AD∅ in the slave station (stations). A new master can then manifest itself.

Fig. 8 in summary shows a diagram of a bidirectional data transport. First, the start condition STA is generated by the master(s). Next, a seven bits slave-station address SLV—ADD is generated, in this case the intended operation is a memory read access. Consequently, these seven bits constitute the memory *chip* address. The eight bit indicates the READ/WRITE operation, which has the value zero. The ninth bit is the acknowledge bit. In the next eight bits a pointer or a data byte may be transferred (DAT/POINT); in this case this is the memory location address. Thus, a 256 byte memory may be addressed (a larger memory would thus need a sequence of two or more address bytes). The memory location address is followed by an acknowledge bit (A). Next, a transition from writing to reading takes place. This is executed by generating a new start condition, slave address plus a READ/WRITE bit at value 1. Next come an acknowledge bit, n data (DAT) bytes each accompanied by its acknowledge bit (here (n = 1), terminated by the stop condition (STO).

## Claims

1. A communication system, comprising a first plurality of stations (32, 34) which are interconnected by a two-wire line, comprising a data wire (22) for transporting thereon a series of data bits, and a clock wire (20) for transporting thereon for each data bit a synchronizing clock signal in synchronism therewith, between at least one transmitting station and at least one receiving station, characterized in that said clock wire is a clock bus wire and said data wire is a data bus wire, both wires being provided with logic means (28, 30) for forming a wired logic function between the voltage levels which denote a first and second logic value respectively which are transmitted by the relevant stations, so that the voltage level on both wires can be pulled to the first logic value by any station presenting a signal having that first logic value to the wire in question, thereby masking any signal having the second logic value that may be presented to the wire in question, and said set of transmitting/receiving stations comprise at least one master station and at least one slave station, any master station comprising first means for in each bit cell generating a finite length clock pulse (58, 59) having the second logic value for presentation to the clock wire, said at least one transmitting station comprising second means for in each bit cell of predetermined bit cell sequences presenting a respective data bit on the data wire for a period of time which covers the duration of the associated clock pulse on the clock pulse wire, including the edges thereof, any master station also comprising:

a) third means for forming a first stop signal by forming a signal transition on the data wire from said first to said second logic value (62), during the presence of a signal of the second logic value on the clock wire;

b) fourth means for forming a first start signal by forming a signal transition on the data wire from said second logic value to said first logic value (60) during the presence of a signal of the second logic value on the clock wire; any non-master station connected in the set comprising fifth means for continuously presenting said second logic value to the clock wire and any non-transmitting station connected in the set comprising sixth means for during said predetermined bit cell sequences continuously presenting said second logic value to the data wire.

2. A communication system as claimed in claim 1, characterized in that a said predetermined bit cell sequence is directly followed by a bit cell for an acknowledge bit to be generated by a receiving station.

3. A communication system as claimed in claim 1 or 2, characterized in that in the case where there are at least two simultaneously transmitting stations being connected to the two-wire line, these transmitting stations are all master stations, each said master station comprising a time slot generator (108, 110) with an input for receiving a second start signal (78, 86) on the clock wire which is initiated by the first station which suppliers a clock signal transition (76) from said second to said first logic value and by the last station which supplies a clock signal transition (84) from said first to said second logic value, and for supplying an "end" signal (114) after termination of the time slot started thereby, said first means being suitable for forming a modified signal (76, 83, 84) for the clock wire under the control of said "end" signal there also being provided a detector (116) for detecting a signal transition on the clock wire as an exclusive representation of said second start signal.

4. A communication system as claimed in claim 3, characterized in that said master stations have further detection means for during a clock pulse detecting a discrepancy between a bit value condition on the data wire and a data bit presently generated by its own second means and thereupon controlling a switch-over to a non-master-transmitting station condition.

5. A communication system as claimed in any of the claims 1 through 4, wherein in a said predetermined bit cell sequence emanating from a master station a bit indicates a transmitter/receiver function to be fulfilled by a slave station.

6. A communication system as claimed in any of the claims 1 through 5 wherein local clock and divider means are provided in a master station for selectable division of the local clock frequency by an integer number before presentation to the clock bus wire.

7. A communication system as claimed in any of the claims 1 through 6 wherein clock filter input means (120) are provided in a station for under local synchronization buffering a clock signal received on the clock bus wire.

8. A communication system as claimed in any of the claims 1 through 7, wherein data filter input means (136) are provided in a station for under local synchronization buffering a data signal received on the data bus wire.

9. A communication system as claimed in any of the claims 1 through 8, wherein at least one station comprises microprocessor means.

10. A communication system as claimed in any of claims 1 through 9, furthermore comprising selection means for in a slave station under control of a predetermined bit within a data bit sequence received selecting between reading and writing conditions.

11. A communication system as claimed in claim 10, furthermore comprising address comparator means for (56) in a slave station responding to at least seven earlier bits of a data sequence received.

12. A communication system as claimed in any of the claims 1 through 11, wherein clock signals transferred on the clock bus wire operate as exclusive synchronizing signals for at least one slave station.

13. A communication system as claimed in any of claims 1 through 12, wherein in a master station said second and fourth means are suitable for starting a data transport operation by successively forming:
said first start signal (66);

a first series of at least two data bits having said first logic value;
a second series of at least one data bit having said second logic value;
a third start signal (68) whose shape corresponds to the first start signal.

14. A communication system as claimed in claim 13, wherein all stations connected comprise an interrogation device whose "dead" time is shorter than the value corresponding to the length of said first series.

15. A communication system as claimed in claim 14, furthermore comprising data transfer means for in a slave station communicating data bits with the data-wire at a bit cell rate whose cell length is at least two times shorter than the length of said "dead" time.

16. A communication system as claimed in claim 13, furthermore comprising reset means for in a slave station upon reception of said third start signal resetting said slave station to an initial state, for thereupon attending to an address receivable on the data bus wire.

17. A master-transmitting station for use in the system according to claim 1 comprising a data port for communicating a series of data bits to the data wire of a two-wire line and a clock port for communicating for each data bit a synchronizing clock signal in a synchronism therewith to the clock wire of the two-wire line, characterized in that for the first logic value locally presented on both said ports the station has a low output impedance and for the second logic value locally presented on both said ports the station has a substantially higher output impedance, and in that said station comprises first means for in each bit cell generating a finite length clock pulse (58, 59) having the second logic value for presentation to the clock port, second means for in each bit cell of predetermined bit cell sequences presenting a respective data bit on the data port for a period of time which covers the duration of the associated clock pulse on the clock pulse port, including the edges thereof, third means for forming a first stop signal by forming a signal transition on the data port from said first to said second logic value (62), during the presentation of a signal of the second logic value on the clock port, and fourth means for forming a first start signal by forming a signal transition on the data port from said second logic value to said first logic value (60) during presentation of a signal of the second logic value on the clock port.

18. The station as claimed in claim 17, characterized in that a said predetermined bit cell sequence is directly followed by a bit cell period for an acknowledge bit.

19. The station as claimed in claim 17 or 18, characterized in that in a said predetermined bit cell sequence a predetermined position bit value indicates an intended transmitter/receiver function.

20. A master-receiver station for use in the system according to claim 1 comprising a data port for communicating a series of data bits to the data wire of a two-wire line and a clock port for communicating for each data bit a synchronizing clock signal in synchronism therewith to the clock wire of the two-wire line, characterized in that for the first logic value locally presented on both said ports the station has a low output impedance and for the second logic value locally presented on both said ports the station has a substantially higher output impedance, and in that said station comprises first means for in each bit cell generating a finite length clock pulse (58, 59) having the second logic value for presentation to the clock port, sixth means for in each bit cell of predetermined bit cell sequences continuously presenting said second logic value to the data terminal as being overridable by a lower impedance signal of said first logic value, third means for forming a first stop signal by forming a signal transition on the data port from said first to said second logic value (62) during the presentation of a signal of the second logic value on the clock port, fourth means for forming a first start signal by forming a signal transition on the data port from said second logic value to said first logic value (60) during presentation of a signal of the second logic value on the clock port.

21. The station as claimed in claim 20, characterized in that a said predetermined bit cell sequence is directly followed by a bit cell period for an acknowledge bit to be generated on said data port.

22. The communications system according to claim 1 comprising a data port for communicating a series of data bits and a clock port for communicating for each data bit a synchronizing clock signal in synchronism therewith, characterized in that for the first logic value locally presented on said data port the station has a low output impedance and for the second logic value locally presented on said data port the station has a substantially higher output impedance, and in that said station comprises second means for in each bit cell of predetermined bit cell sequences presenting a respective data on the data port for a period of time which covers the duration of a second logic value clock pulse signal receivable on the clock pulse port, including the edges thereof.

23. The station as claimed in claim 22, characterized in that a slave-transmitting station which comprises said predetermined bit cell sequence is followed by a bit cell period for an acknowledge bit receivable on said data port as a prerequisite for enabling directly successive transmission of any further such predetermined bit cell sequence.

24. The communicating system according to claim 1 comprising a slave-receiver station which comprises a data port for communicating a series of data bits and a clock port for communicating for each data bit a synchronizing clock signal in synchronism therewith, characterized in that said station comprises reception means for receiving predetermined bit cell sequences arrivable on said data port and in that a predetermined bit cell sequence is directly followed by a bit cell for an acknowledge bit emanated by said station, and in that said station comprises address comparator means for responding to at least seven earlier bits of a data bit sequence received.

**Patentansprüche**

1. Kommunikationssystem mit einer ersten Anzahl von Stationen (32, 34), die durch eine Zweidrahtleitung miteinander verbunden sind, die einen Datendraht (22) um Übertragen einer Reihe von Datenbits und einen Taktdraht (20) zum synchronen Übertragen eines synchronisierenden Taktsignals für jedes Datenbit zwischen zumindest einer sendenden Station und zumindest einer empfangenden Station enthält, dadurch gekennzeichnet, dass der Taktdraht ein Taktbusdraht und der Datendraht ein Datenbusdraht ist, die beide logischen Mitteln (28, 30) zur Bildung einer verdrahteten logischen Funktion zwischen den Spannungspegeln eines ersten bzw. eines zweiten logischen Werts verbunden sind, die von den betreffenden Stationen ausgesendet werden, so dass der Spannungspegel an beiden Drähten durch eine jede angeschlossene Station, die ein Signal mit dem ersten logischen Wert erzeugt, auf diesen ersten logischen Wert am betreffenden Draht gebracht werden kann, wobei jedes Signal mit dem zweiten logischen Wert, das dem betreffenden Draht zugeführt wird, maskiert wird, und dass der erwähnte Satz von sendenden/empfangenden Station zumindest eine Meisterstation und zumindest eine Sklavenstation enthält, wobei jede Meisterstation erste Mittel zum Erzeugen eines Taktimpulses mit endlicher Länge und dem zweiten logischen Wert in jeder Bitzelle zum Zuführen zum Taktdrahl enthält, wobei zumindest eine sendende Station zweite Mittel enthält, die in jeder Bitzelle vorgegebener Bitzellenfolgen ein jeweiliges Datenbit dem Datandraht zuführt in einer Zeit, die die Dauer des zugeordnet Taktimpulses auf dem Taktimpulsdraht einschliesslich der Flanken umfasst, dass weiter jede Meisterstation mit folgenden Mitteln versehen ist:

a) dritten Mitteln zur Bildung eines ersten Stoppsignals durch die Bildung eines Signalübergangs vom ersten auf den zweiten logischen Wert auf dem Datendraht während eines auf dem Takdraht vorhandenen Signals des zweiten logischen Werts;

b) vierten Mitteln zur Bildung eines ersten Startsignals durch die Bildung eines Signalübergangs vom zweiten auf den ersten logischen Wert am Datendraht während eines am Taktdraht vorhandenen Signals des zweiten logischen Werts;

dass fünfte Mittel in allen angeschlossenen Nicht-Meisterstationen ununterbrochen den zweiten logischen Wert dem Taktdraht und sechste Mittel in allen angeschlossen, nicht sendenden Stationen während der vorgegebenen Bitzellenfolgen ununterbrochen den zweiten logischen Wert dem Datendraht zuführen.

2. Kommunikationssystem nach Anspruch 1, dadurch gekennzeichnet, dass einer vorgegebenen Bitzellenfolge direkt eine Bitzelle für ein von einer empfangenden Station zu erzeugendes Bestätigungsbit folgt.

3. Kommunikationssystem nach Anspruch 1 oder 2, dadurch gekennzeichnet, dass bei zumindest zwei zusammen sendenden Stationen in der Verbindung mit der Zweidrahtleitung diese alle auch Meisterstationen sind, dass in jeder Meisterstation ein Zeitdauergenerator (108, 110) mit einem Eingang vorhanden ist, der ein am Taktdraht erzeugtes zweites Startsignal (78, 86) empfängt, das von der ersten Station ausgelöst wird, die einen Taktsignalübergang (76) vom zweiten auf den ersten logischen Wert erzeugt, und von der letzten Station ausgelöst wird, die einen Taktsignalübergang (84) vom ersten auf den zweiten logischen Wert erzeugt, und beim Ablauf der dadurch gestarteten Zeitdauer ein "Ende"-Signal (114) abgibt, dass die ersten Mittel unter der Steuerung des "Ende"-Signals ein geändertes Signal (76, 83, 84) für den Taktdraht bilden und dass weiter ein Detektor (116) vorgesehen ist, der einen Signalübergang am Taktdraht als ausschliessliche Darstellung des zweiten Startsignals detektiert.

4. Kommunikationssystem nach Anspruch 3, dadurch gekennzeichnet, dass die Meisterstationen weitere Detektormittel zum Detektieren einer Unstimmigkeit zwischen einem Bitwertzustand am Datendraht und einem zu diesem Zeitpunkt von ihrem eigenen zweiten Mittel erzeugten Datenbit und zum anschliessenden Steuern einer Umschaltung auf den Zustand einer nicht als Meister sendenden Station enthalten.

5. Kommunikationssystem nach einem der Ansprüche 1 bis 4, dadurch gekennzeichnet, dass in einer von einer Meisterstation ausgehenden vorgegebenen Bitzellenfolge ein Bit eine Sender-/Empfängerfunktion angibt, die von einer Sklavenstation durchzuführen ist.

6. Kommunikationssystem nach einem der Ansprüche 1 bis 5, dadurch gerkennzeichnet, dass zum wählbaren Teilen der örtlichen Taktfrequenz durch eine ganze Zahl vor der Eingabe in den Taktbusdraht ortliche Takt- und Teilermittel in einer Meisterstation vorgesehen sind.

7. Kommunikationssystem nach einem der Ansprüche 1 bis 6, dadurch gekennzeichnet, dass zum Puffern eines am Taktbusdraht empfangenen Taktsignals unter örtlicher Synchronisation Taktfiltereingabemittel (120) in einer Station vorgesehen sind.

8. Kommunikationssystem nach einem der Ansprüche 1 bis 7, dadurch gekennzeichnet, dass zum Puffern eines am Datenbusdraht empfangenen Datensignals unter örtlicher Synchronisation Datenfiltereingabemittel (136) vorgesehen sind.

9. Kommunikationssystem nach einem der Ansprüche 1 bis 8, dadurch gekennzeichnet, dass zumindest eine Station Mikroprozessormittel enthält.

10. Kommunikationssystem nach einem der Ansprüche 1 bis 9, dadurch gekennzeichnet, dass weiter Wählmittel darin vorgesehen sind, die in einer Sklavenstation unter der Steuerung eines vorgegebenen Bits in eine empfangenen Datenbitfolge zwischen Lese- und Schreibzuständen wählt.

11. Kommunikationssystem nach Anspruch 10, dadurch gekennzeichnet, dass ausserdem darin Adresskomparatormittel (156) in einer Sklavenstation vorgesehen sind, die auf zumindest sieben frühere Bits einer empfangenen Datenfolge anspricht.

12. Kommunikationssystem nach einem der Ansprüche 1 bis 11, dadurch gekennzeichnet, dass auf dem Taktbusdraht übertragene Taktsignale zumindest für eine Sklavenstation als ausschliessliche Synchronisationssignal arbeiten.

13. Kommunikationssystem nach einem der Ansprüche 1 bis 12, dadurch gekennzeichnet, dass in einer Meisterstation die zweiten und vierten Mittel sich zum Starten einer Datenübertragungsoperation durch die aufeinanderfolgende Bildung folgender Zustände eignen: des ersten Startsignals (66); einer ersten Reihe von zumindest zwei Datenbits mit dem ersten logischen Wert; einer zweiten Reihe von zumindest einem Datenbit mit dem zweiten logischen Wert; eines in seiner Form dem ersten Startsignal entsprechenden dritten Startsignals (68).

14. Kommunikationssystem nach Ansprüche 13, dadurch gekennzeichnet, dass alle angeschlossenen Stationen eine Abfrageanordnung enthalten, deren Totzeit kürzer als entsprechend der Länge der ersten Reihe von Datenbits ist.

15. Kommunikationssystem nach Anspruch 14, dadurch gekennzeichnet, dass weiter noch Datenüberltragungsmittel vorgesehen sind , die in einer Sklavenstation Datenbits auf einen Datrendaht mit einer Bitzellengeschwindigkeit übertragen, bei der dei Zellenlänge zumindest zweimal kürzer als die Länge der Blindzeit ist.

16. Kommunikationssystem nach Anspruch 13, dadurch gekennzeichnet, dass auch Rückstellmittel vorgesehen sind, die in einer Sklavenstation beim Empfang des dritten Startsignal diese Sklavenstation in einen Anfangszustand rückstellen, wonach auf eine am Datenbusdraht anzukommende Adresse ge-wartet wird.

17. Sendende Meisterstation zur Verwendung im System nach Anspruch 1 mit einem Datentor zun Kommunizieren einer Datenbitfolge zum Datendraht einer Zweidrahtleitung und mit einem Takttor zum Kommunizieren eines synchronisierenden, mit jedem Datenbit synchron auftretenden Taksignal für jedes Datenbit zum Takdraht der Zweidrahtleitung, dadurch gekennzeichnet, dass für den ersten, örtlich zugeführten logischen Wert an beiden Toren die Station eine niedrige Ausgangsimpedanz und für den zweiten, an beiden Toren örtlich zugeführten logischen Wert die Station eine wesentlich höhere Ausgangsimpedanz hat und dass die Station erste Mittel zun Erzeugen eines Taktimpulses (58, 59) mit endlicher Länge in jeder Bitzelle und mit den dem zweiten logischen Wert zum Zuführen zum Takttor, zweite Mittel zum Zuführen eines jeweiligen Datenbits in jeder Bitzelle vorgegebener Bitzellenfolgen zum Datentor für eine Zeit, die der Dauer des zugeordneten Taktimpulses am Taktimpulstor einschliesslich seiner Flanken entspricht, dritte Mittel zur Bildung eines ersten Stoppsignals durch die Bildung eines Signalübergangs am Datentor vom ersten auf den zweiten logischen Wert (62) beim Auftreten eines Signals mit dem zweiten logischen Wert am Takttor und vierte Mittel · zur Bildung eines ersten Startsignals durch die Bildung eines Signalübergangs am Datentor vom zweiten logischen Wert auf den ersten logischen Wert (60) beim Erscheinen eines Signals des zweiten logischen Werts am Takttor enthält.

18. Station nach Anspruch 17, dadurch gekennzeichnet, dass einer vorgegebenen Bitzellenfolge eine Bitzellenzeit für ein Bestätigungsbit direkt folgt.

19. Station nach Anspruch 17 oder 18, dadurch gekennzeichnet, dass in einer vorgegebenen Bitzellenfolge eine vorgegebener Stellenbitwert eine beabsichtigte Sender-/Empfänger-Funktion angibt.

20. Empfanggende Meisterstation zur Verwendung im System nach Anspruch 1 mit einem Datentor zum Kommunizieren einer Datenbitfolge zum Datendraht und mit einem Takttor zum Kommunizieren eines synchronisierenden, mit jedem Datenbit synchron auftretenden Taktsignal für jedes Datenbit zum Taktraht der Zweidrahtleitung, dadurch gekennzeichnet, dass für den ersten, an beiden Toren örtlich zugeführten logischen Wert die Station eine niedrige Ausgangsimpedanz und für den zweiten, an beiden Toren örtlich zugeführen logischen Wert die Station eine wesentlich höhere Ausgangsimpedanz hat und dass die Station erste Mittel zum Erzeugen eines Taktimpulses (58, 59) mit endlicher Länge in jeder Bitzelle und mit dem zweiten logischen Wert zum Zuführen zum Takttor, sechste Mittel zum ununterbrochenen Zuführen des zweiten logischen Werts in jeder Bitzelle der vorgegebenen Bitzellenfolgen zum Datentor derart, dass dieser Wert von einem Signal des ersten logischen Werts mit niedriger Impedanz unterdrückt werden kann, dritte Mittel zur Bildung eines ersten Stoppsignals durch die Bildung eines Signalübergangs am Datentor zom ersten auf den zweiten logischen Wert (62) beim Erscheinen eines Signals des zweiten logischen Werts am Takttor, vierte Mittel zur Bildung eines ersten Startsignals durch die Bildung eines Signalübergangs am· Datentor vom zweiten logischen Wert auf den ersten logischen Wert (60) beim Erscheinen eines Signals des zweiten logischen Werts am Takttor enthält.

21. Station nach Anspruch 20, dadurch gekennzeichnet, dass einer vorgegebenen Bitzellenfolge eine Bitzellenzeit für ein am Datentor zu erzeugendes Bestätigungsbit direkt folgt.

22. Kommunikationssystem nach Anspruch 1 mit einer sendenden Sklavenstation, die ein Datentor zum Kommunizieren einer Reihe von Datenbits und ein Takttor zum Kommunizieren eines mit jedem Datenbit synchron laufenden, synchronisierenden Taktsignals für jedes Datenbit enthält, dadurch gekennzeichnet, dass für den ersten, am Datentor örtlich zugeführten logischen Wert die Station eine niedrige Ausgangsimpedanz und für den zweiten, am Datentor örtlich zugeführten logischen Wert die Station eine wesentlich höhere Ausgangsimpedanz hat und dass die Station zweite Mittel zum Zuführen eines jeweiligen Datenbits in jeder Bitzelle der vorgegebenen Bitzellenfolgen zum Datentor für eine Zeit, die die Dauer eines am Taktimpulstor empfangbaren Taktimpulssignals des zweiten logischen Werts einschliesslich seiner Flanken überdeckt, enthält.

23. Station nach Anspruch 22, dadurch gekennzeichnet, dass einer vorgegebenen Bitzellenfolge eine Bitzellenzeit für ein am Datentor empfangbares Bestätigungsbit folgt, das als Vorbedingung zur Freigabe des direkt auffolgenden Übertrages jeder weiteren einer derartigen vorgegebenen Bitzellenfolge dient.

24. Kommunikationssystem nach Anspruch 1 mit einer empfangenden Sklavenstation, die ein Datentor zum Kommunizieren einer Reihe von Datenbits und ein Takttor zum Kommunizieren eines mit jedem Datenbit synchron laufenden, synchronisierenden Taktsignals enthält, dadurch gekennzeichnet, dass die Station Empfangsmittel zum Empfangen vorgegebener Bitzellenfolgen, die am Datentor empfangbar sind, enthält, dass einer vorgegebenen Bitzellenfolge eine Bitzelle für eine von der Station abgegebenes Bestätigungsbit folgt und dass die Station Adressvergleichsmittel zum Ansprechen auf zumindest sieben frühere Bits einer empfangenen Datenbitfolge enthält.

**Revendications**

1. Système de communication comprenant une première série de stations (32, 34) qui sont interconnectées par une ligne bifilaire comprenant un fil de données (22) destiné à transporter une série de bits de données et un fil d'horloge (20) destiné à transporter, pour chaque bit de données, un signal d'horloge de synchronisation en synchronisme avec ce bit, entre au moins une station d'émission et au moins une station de réception, caractérisé en ce que le fil d'horloge est un fil de bus d'horloge et le fil de données et un fil de bus de données, les deux fils étant pourvus de moyens logiques (28, 30) destinés à former une fonction logique câblée entre les niveaux de tension qui désignent respectivement une première et une seconde valeur logique qui sont transmises par les stations en question, de sorte que le niveau de tension sur les deux fils peut être amené à la première valeur logique par toute station présentant un signal ayant cette première valeur logique au fil en question, ce qui masque tout signal ayant la seconde valeur logique qui peut être présenté au fil en question, et la série de stations d'émission/réception comprend au moins une station maîtresse et au moins une station asservie, toute station maîtresse comprenant un premier dispositif destiné à produire, dans chaque cellule de bit, une impulsion d'horloge de longeur finie (58, 59) ayant la seconde valeur logique à présenter au fil d'horloge, la dite au moins une station d'émission comprenant un second dispositif destiné, dans chaque cellule de bit de séquences de cellules de bits prédéterminées, à présenter un bit de données correspondants sur le fil de données pendant une période qui couvre la durée de l'impulsion d'horloge associée sur le fil d'impulsions d'horloge, y compris ses flancs, toute station maîtresse comprenant également:
(a) une troisième dispositif pour former un premier signal d'arrêt en formant, sur le fil de données, une transition de signal allant de la première à la seconde valeur logique (62) pendant la présence d'un signal de la seconde valeur logique sur le fil d'horloge;
(b) un quatrième dispositif pour former un premier signal de démarrage en formant sur le fil de données une transition de signal allant de la seconde valeur logique à la première valeur logique (60) pendant la présence d'un signal de la seconde valeur logique sur le fil d'horloge; toute station non maîtresse connectée dans la série comprenant cinquième dispositif destiné à présenter de manière continue la second valeur logique au fil d'horloge et toute station non émettrice connectée dans la série comprenant un sixième dispositif destiné à présenter de manière continue, pendant les séquences de cellules de bits prédéterminées, la seconde valeur logique au fil de données.

2. Système de communication suivant la revendication 1, caractérisé en ce qu'une séquence de cellules de bits prédéterminée est suivie directement d'une cellule de bit destinée à un bit d'accusé de réception à produire par une station réceptrice.

3. Système de communication suivant la revendication 1 ou 2, caractérisé en ce que, dans le cas où au moins deux stations émettant simultanément sont connectées à la ligne à deux fils, ces stations émettrices sont toutes des stations maîtresses, chaque station maîtresse comprenant un générateur de tranches de temps (108, 110) présentant une entrée destinée à recevoir un second signal de démarrage (78, 86) sur le fil d'horloge qui est amorcé par la première station fournissant une transition de signal d'horloge (76) de la seconde à la première valeur logique et par la dernière station fournissant une transition de signal d'horloge (84) de la première à la seconde valeur logique, et à fournir un signal de fin (114) au terme de la tranche de temps ainsi démarrée, le premier dispositif étant à même de former un signal modifié (76, 83, 84) pour le fil d'horloge sous la commande du siganl de "fin", und détecteur 116 étant aussi prévu pour détecter une transition de signal sur le fil d'horloge à titre de représentation exclusive du second signal de démarrage.

4. Système de communication suivant la revendication 3, caractérisé en ce que les stations maîtresses comportante d'autres moyens de détection pour, pendant une impulsion d'horloge, détecter une différence entre une condition de valeur de bit sur le fil de données et un bit de données actuellement produit par son propre second dispositif, puis pour commander une commutation sur un état de station d'émission non maîtresse .

5. Système de communication suivant l'une quelconque des revendications 1 à 4, caractérisé en ce que, dans une séquence de cellulose de bits prédéterminée provenant d'une station maîtresse, un bit indique une fonction d'émetteur/récepteur à remplir par une station asservie.

6. Système de communication suivant l'une quelconque des revendications 1 à 5, caractérisé en ce qu'une horloge locale et des moyens de division sont prévus dans une station maîtresse pour permettre une division pouvent être sélectionnée de la frequence d'horloge locale par un nombre entier avant présentation au fil de bus d'horloge.

7. Système de communication suivant l'une quelconque des revendications 1 à 6, caractérisé en ce que des moyens d'entrée à filtre d'horloge (120) sont prévus dans une station pour, sous une synchronisation locale, tamponner un signal d'horloge reçu sur le fil de bus d'horloge.

8. Système de communication suivant l'une quelconque des revendications 1 à 7, caractérisé en ce que des moyens d'entrée à filtre de données (136) sont prévus dans une station pour, sous une synchronisation locale, tamponner un signal de données reçu sur le fil de bus de données.

9. Système de communication suivant l'une quelconque des revendications 1 à 8, caractérisé en ce qu'au moins une station comprend un dispositif à microprocesseur.

10. Système de communication suivant l'une quelconque des revendications 1 à 9, caractérisé en ce qu'il comprend, en outre, un dispositif de sélection pour, dans une station asservie, sous la commande d'un bit prédéterminé dans une séquence de bits de données reçue, effectuer une sélection entre l'état de lecture et l'état d'écriture.

11. Système de communication suivant la revendication 10, caractérisé en ce qu'il comprend, en outre, une, dispositif comparateur d'adresses pour (156) dans une station asservie, réagir à au moins 7 bits précédents d'une séquence de données reçue.

12. Système de communication suivant l'une quelconque des revendications 1 à 11, caractérisé en ce que des signaux d'horloge transférés sur le fil de bus d'horloge interviennent en tant que signaux de synchronisation exclusifs pour au moins une station asservie.

13. Système de communication suivant l'une quelconque des revendications 1 à 12, caractérisé en ce que, dans une station maîtresse, le deuxième et le quatrième dispositif sont à même de faire démarrer une opération de transport de donnés en formant successivement:

le premier signal de démarrage (66);

une première série d'au moins deux bits de données présentant la première valeur logique;

une deuxième série d'au moins un bit de données présentant la seconde valeur logique;

un troisième signal de démarrage (68) dont la forme correspond à celle du premier signal de démarrage.

14. Système de communication suivant la revendication 13, caractérisé en ce que toutes les stations connectées forment un dispositif d'interrogation dont le temps "mort" est plus court que le valeur correspondant à la longeur de la première série.

15. Système de communication suivant la revendication 14, caractérisé en ce qu'il comprend, en outre, un dispositif de transfert de données pour, dans une station asservie, communiquer des bits de données au moyen du fil de données à une cadence de cellule de bits dont la longeur de cellule est au moins deux fois plus petite que la longueur du temps "mort".

16. Système de communication suivant la revendication 13, caractérisé en ce qu'il comprend, en outre, un dispositif de repositionnement pour, dans une station asservie, à la réception du troisième signal de démarrage, ramener la station asservie dans un état initial en vue d'accéder ensuite à une adresse pouvant être reçue sur le fil de bus de données.

17. Station d'émission maîtresse à utiliser dans le système la revendication 1, comprenant un port de données pour communiquer une série de bits de données au fil de données d'une ligne à deux fils et un port d'horloge pour communiquer pour chaque bit de données un signal d'horloge de synchronisation en synchronisme avec ce bit au fil d'horloge de la ligne à deux fils, caractérisée en ce que pour la première valeur logique présentée localement sur les deux ports, la station présente une faible impédance de sortie et pour la seconde valeur logique présentée localement sur les deux ports, la station présente und impédance de sortie nettement plus élevée et la station comprend un premier dispositif pour, dans chaque cellule de bit, produire une impulsion d'horloge de longeur finie (58, 59) avent a la seconde valeur logique et destinée à être présentée au port d'horloge, un second dispositif pour, dans chaque cellule de bit de séquences de cellules de bits prédéterminées, présenter un bit de données correspondant sur le port de données pendant une période qui couvre la durée de l'impulsion d'horloge associée sur le port d'impulsions d'horloge, y compris ses flancs, un troisième dispositif pour former un premier signal d'arrêt par formation d'une transition de signal sur le port de données allant de la première à la seconde valeur logique (62) pendant la présentation d'un signal de la seconde valeur logique sur le port d'horloge, et un quatrième dispositif pour former un premier signal démarrage par formation d'une transition de signal sur le port de données allant de la seconde valeur logique à la première valeur logique (60) pendant la présentation d'un signal de la seconde valeur logique sur le port d'horloge.

18. Station suivant la revendication 17, caractérisée en ce qu'une séquence de cellules de bits prédéterminée est suivie directement d'une période de cellule de bit destinée à un bit d'accusé de réception.

19. Station suivant la revendications 17 ou 18, caractérisé en ce que dans la séquence de cellules de bits prédéterminée, une valeur de bit de position prédéterminée indique une fonction d'émetteur/récepteur prévue.

20. Station de réception maîtresse à utiliser dans le système suivant la revendication 1, comprenant un port de données pour communiquer une série de bits de données au fil de données d'une ligne à deux fils et un port d'horloge pour communiquer pour chaque bit de données un signal d'horloge de synchronisation en synchronisme avec ce bit au fil d'horloge de la ligne à deux fils, caractérisée en ce que, pour la première valeur logique présentée localement sur les deux ports, la station présente une impédance de sortie faible et pour la seconde valeur logique présentée localement sur les deux ports, la station présente une impédance de sortie sensiblement plus élevée et la station comprend un premier dispositif pour, dans chaque cellule de bit, produire une impulsion d'horloge de longeur finie (58, 59) ayant la seconde valeur logique et destinée à être présentée au port d'horloge, un deuxième dispositif pour, dans chaque cellule de bit de séquences de cellules de bits prédéterminée, présenter de manière continue la seconde valeur logique à la borne de données comme pouvant être supplantée par un signal d'impédance plus basse de la première valeur logique, un troisième dispositif pour former un premier signal d'arrêt par formation d'une transition de signal sur le port de données allant de la première à la seconde valeur logique (62) pendant la présentation d'un signal de la seconde valeur logique sur le port d'horloge et un quatrième dispositif pour former un premier signal de démarrage par formation d'une transition de signal sur le port de données allant de la seconde valeur logique à la première valeur logique (60) pendant la présentation d'un signal de la seconde valeur logique sur le port d'horloge.

21. Station suivant la revendication 20, caractérisée en ce qu'une séquence de cellules de bits prédéterminée est suivie directement d'une période de cellule de bit pour un bit d'accusé de réception à produire sur le port de données.

22. Système de communication suivant la revendication 1, comprenant une station d'émission asservie qui comprend un port de données pour communiquer une série de bits de données et un port d'horloge pour communiquer pour chaque bit de données un signal d'horloge de synchronisation en synchronisme avec ce bit, caractérisé en ce que, pour la première valeur logique présentée localement sur le port de données, la station présente une impédance de sortie peu élevée et, pour la seconde valeur logique présentée localement sur le port de donnés, la station présente une impédance de sortie nettement plus élevée, et la station comprend un deuxième dispositif pour, dans chaque cellule de bit de séquence de cellules de bits prédéterminée, présenter un bit de données respectif sur le port de données pendant une période qui couvre la durée d'un signal d'impulsion d'horloge de la seconde valeur logique pouvant être reçu sur le port d'impulsions de données, y compris ses flancs.

23. Station suivant la revendication 22, caractérisée en ce que la séquence de cellules de bits prédéterminée est suivie d'une période de cellule de bit destinée à un bit d'accusé de réception pouvant être reçu sur le port de données à titre d'exigence préalable pour valider la transmission qui suit immédiatement toute autre séquence de cellules de bits prédéterminéd de ce genre.

24. Système de communication suivant la revendication 1, comprenant une station de récepteur asservie qui comprend un port de données pour communiquer une série de bits de données et un port d'horloge pour communiquer pour chaque bit de données un signal d'horloge de synchronisation en synchronisme avec ce bit, caractérisé en ce que la station comprend un dispositif de réception destiné à recevoir des séquences de cellules de bits prédéterminées pouvant parvenir sur le port de données et une séquence de cellules de bits prédéterminée est suivie directement d'une cellule de bit destinée à un bit d'accusé de réception provenant de la dite station et la dite station comprend un dispositif comparateur d'adresses destiné à réagir à au moins sept bits précédents d'une séquence de bits de données reçue.

FIG.1

FIG.2

FIG.3

0 051 332

FIG.4

FIG.5

FIG.6

FIG.8

FIG.7